# FASCICULE DE BREVET EUROPEEN

(11) **EP 2 864 010 B1**
(45) Date de publication et mention de la délivrance du brevet: **07.07.2021**
(21) Numéro de dépôt: 13744826.2
(22) Date de dépôt: 12.06.2013
(51) Int. Cl.: B01D 46/24, B01D 63/08, B01D 69/10, G01N 15/00

(54) **ENSEMBLE DE FILTRATION COMPORTANT UN FILTRE ET UN SUPPORT DE FILTRE ET PROCEDE DE COLLECTE ET D'ANALYSE DE NANOPARTICULES ASSOCIE**
FILTRIERUNGSANORDNUNG MIT EINEM FILTER UND EINEM FILTERTRÄGER UND ZUGEHÖRIGES VERFAHREN ZUM SAMMELN UND ANALYSIEREN VON NANOPARTIKELN
FILTRATION ASSEMBLY COMPRISING A FILTER AND A FILTER SUPPORT AND ASSOCIATED METHOD FOR THE COLLECTION AND ANALYSIS OF NANOPARTICLES

(30) Priorité: 20.06.2012 FR 1255785
(43) Date de publication de la demande: 29.04.2015
(73) Titulaire: Commissariat à l'Énergie Atomique et aux Énergies Alternatives, 75015 Paris (FR); Institut Technique des Gaz et de l'Air, 35760 Saint-Grégoire (FR)
(72) Inventeur: CLAVAGUERA, Simon, F-66200 Alenya (FR); DECOLIN, Eric, F-38330 Montbonnot Saint Martin (FR); GUIOT, Arnaud, F-38120 Saint Egreve (FR); HEBERT, Guillaume, F-38700 La Tronche (FR); JACQUINOT, Sébastien, F-26300 Chatuzange-le-Goubet (FR); MOTELLIER, Sylvie, F-38380 Saint-Laurent-du-Pont (FR)
(74) Mandataire: Nony
(86) Numéro de dépôt international: PCT/IB2013/054807
(87) Numéro de publication internationale: WO 2014/001936

(56) Documents cités:
- WO-A1-01/51177
- WO-A1-2009/128009
- WO-A2-2006/119301
- DE-A1-102008 006 320
- FR-A1- 2 647 512
- FR-A1- 2 830 872
- US-A- 4 362 047
- US-A- 4 961 916
- US-A1- 2008 072 764
- US-A1- 2012 097 603
- US-B1- 6 523 367
- US-B1- 6 779 411

## Description

### Domaine technique

La présente invention concerne le domaine de la collecte et de l'analyse des nanoparticules susceptibles d'être présentes en suspension dans l'air.

Elle concerne plus particulièrement un ensemble de filtration comportant un filtre à pores aptes à retenir en leur sein des nanoparticules susceptibles d'être présentes dans un flux d'air destiné à passer à travers le filtre, et un support de filtre.

L'invention vise à proposer un maintien du filtre le plus plan possible dans son support afin de permettre son analyse de surface fiable, ultérieurement par fluorescence X, pour l'analyse des nanoparticules retenues dans le filtre.

Un appareil et un procédé de montage du filtre dans son support permettant d'obtenir le maintien du filtre visé sont également décrits. Ils ne font pas partie de la présente invention.

L'invention concerne enfin un procédé de collecte et d'analyse de nanoparticules associé.

### Etat de la technique

L'essor rapide des nanotechnologies rend indispensable la poursuite des travaux sur les impacts sanitaires et environnementaux de ces nouveaux matériaux afin d'avoir des conditions de sécurité optimales. Depuis quelques années, les nanoparticules, c'est-à-dire des particules de dimensions nanométriques ont fait l'objet d'intenses recherches et leur usage a commencé à se répandre dans divers domaines tels que la santé, la microélectronique, les technologies de l'énergie ou les produits de consommation courante tels que peintures et cosmétiques. Il est donc nécessaire de mettre au point des méthodes d'évaluation de l'exposition aux nanoparticules des travailleurs, des consommateurs et de l'environnement.

Le développement de méthodes fiables d'échantillonnage et d'analyse d'aérosols est ainsi un enjeu crucial en termes de santé publique et de prévention des risques au poste de travail.

Usuellement, les mesures d'expositions à des particules en suspension dans l'air sont effectuées par pesée des filtres avant et après le prélèvement. Cependant, ces mesures gravimétriques ne sont fiables que pour des quantités très élevées de particules (supérieures à la dizaine, voire la centaine de microgrammes). Pour la détermination de quantités plus faibles, les analyses élémentaires de type ICPMS sont préférées. Or, ce type d'analyse nécessite une lourde et fastidieuse préparation des échantillons (digestion du filtre qui prend plusieurs heures...).

Aussi, les inventeurs ont pensé à utiliser une technique d'analyse par fluorescence X, notamment à faible incidence, qui ont déjà fait ses preuves, d'une part en étant extrêmement performantes pour déterminer la composition élémentaire de matériaux en couches minces et, d'autre part en fournissant des résultats de mesure en très peu de temps, typiquement en quelques minutes.

Les inventeurs ont alors conclu que pour pouvoir utiliser cette technique d'analyse par fluorescence X à l'analyse de nanoparticules retenues par un filtre adapté, il était impératif que celui-ci soit le plus plan (à plat) possible lors de l'analyse, et incidemment également lors de la collecte pour pouvoir introduire directement le filtre après la collecte dans un spectromètre de de fluorescence X.

Or, à ce jour, il n'existe aucune méthode ni aucun dispositif commercial(e) ou simplement décrit(e) dans la littérature qui permet de maintenir plats, ou autrement dit sans pli, des filtres destinés à collecter des particules de l'air.

Ainsi, la demande de brevet WO 98/08072 et le brevet US 6779411 décrivent des dispositifs de collecte de particules avec filtres et supports de filtres logés dans des cassettes d'échantillonnage des particules. Les inconvénients de ces dispositifs sont nombreux. Tout d'abord, ils ne permettent pas de faire une analyse élémentaire des particules collectées sans post-traitement. Des mesures par gravimétrie sont effectuées plusieurs fois et des analyses par microcopie peuvent l'être également après préparation adaptée d'une zone de collecte bien localisée. Ensuite, aucune méthode ni dispositif de mise en place des filtres sur leur support et dans les cassettes n'est décrit explicitement dans ces documents, ce qui laisse à penser que cette mise en place est effectuée manuellement. Or, une mise en place manuelle est susceptible d'introduire de nombreuses impuretés sur et autour du filtre qui sont préjudiciables à une analyse précise et véritable des particules collectées.

Les demandes de brevet FR 2662635 et FR2803238 décrivent, quant à elles, des filtres à trous perforés dans l'épaisseur du matériau, notamment en polymère et, les procédés de fabrication associés. Aucune mention n'est faite dans ces documents de la mise en œuvre concrète de ces filtres pour réaliser la collecte proprement dite des particules. En particulier, ces demandes de brevet ne décrivent pas ni de support de filtre, ni de moyens d'identification et de traçabilité des filtres une fois la collecte de particules effectuée.

US4362047, WO0151177, DE102008006320 et FR2647512 décrivent d'autres ensembles de filtration.

Il existe donc un besoin pour améliorer le montage de filtres destinés à la collecte de nanoparticules, sur leur support, notamment en vue de les maintenir les plus à plat possible et ce, afin de pouvoir réaliser l'analyse des nanoparticules collectées par une technique de fluorescence X.

### Exposé de l'invention :

Pour répondre à ce besoin, l'invention a pour objet un ensemble de filtration pour filtrer des nanoparticules selon la revendication indépendante 1, comportant :
- un filtre à pores aptes à retenir en leur sein des nanoparticules susceptibles d'être présentes dans un flux d'air destiné à passer à travers le filtre,
- un support de filtre comportant deux parties dont :
   - une partie inférieure formant un socle comportant une portée périphérique sur laquelle le filtre est apte à être en appui ;
   - une partie supérieure en forme de bague apte à être montée autour de la portée du socle, le montage de la bague autour de la portée du socle permettant de tendre le filtre selon une direction radiale à la direction de montage, le jeu de montage entre la bague et la portée du socle étant dimensionné de sorte à maintenir sous tension mécanique par pincement le filtre, en appui sur la portée, selon une direction radiale à la direction de montage, la portée du socle (2) faisant saillie par rapport à la bague (1) la portée (20) du socle (2) faisant saillie par rapport à la bague (1), de sorte qu'après assemblage de la bague (1) avec le socle (2), la portée (20) est surélevée par rapport à la bague (1).

Par « portée périphérique », on entend le sens usuel en mécanique, à savoir une surface périphérique du socle de géométrie suffisamment parfaite pour assurer un contact intégral avec le filtre une fois le montage réalisé.

Par « montage de la bague autour de la portée », on entend un montage mécanique de la bague à la périphérie externe de la portée, la périphérie externe étant conformée pour bloquer mécaniquement la bague. Avantageusement, la bague vient se bloquer d'elle-même par encliquetage à la périphérie externe de la portée.

Il va de soi que pour permettre le pincement du filtre, on dimensionne le diamètre du filtre de sorte à ce qu'il soit supérieur à la somme du diamètre interne du socle et de l'épaisseur radiale de la portée.

Autrement dit, l'invention consiste essentiellement en une solution permettant à la fois de collecter des nanoparticules à l'aide d'un filtre à porosité ayant déjà été testé avec succès et, garantir le maintien le plus à plat possible du filtre pour préserver une surface plane et lisse garante d'une analyse fiable par fluorescence X, notamment à faibles incidences.

Une fois le prélèvement, autrement dit la collecte ou l'échantillonnage, effectué, aucune manipulation du filtre ne se fait entre la collecte et l'analyse et, l'ensemble de filtration peut être analysé par fluorescence X. Il peut également être stocké temporairement dans une boite en vue de son analyse ultérieure. Il peut enfin être détruit, par exemple en cas de collecte non satisfaisante ou en cas de stockage temporaire trop long.

La bague qui vient se monter autour de la portée du socle du support de filtre permet ainsi de tendre radialement, c'est-à-dire transversalement à la direction de montage, puis de le maintenir sous tension par pincement sans générer de pli ou plissure sur le filtre. Ainsi, le filtre tendu est maintenu en appui sur la portée du socle, qui délimite la position du plan du filtre par rapport au support, ce qui permet d'effectuer son irradiation ultérieure par rayons X sous incidence rasante (faible incidence, typiquement inférieure à 2°) sans effet d'ombre.

La portée du socle délimite la position du plan du filtre par rapport au support. Autrement dit, le filtre est tendu et sa surface tendue définie la surface supérieure de l'ensemble de filtration selon l'invention. Ainsi, l'ensemble de filtration peut être manipulé avec le filtre maintenu à plat, en vue d'être analysé dans un appareil de fluorescence X sous incidence rasante avec un faible angle d'incidence. Autrement dit encore, le montage du filtre sur le support de filtre selon l'invention permet de transporter et de stocker le filtre sans risque pour ce dernier. En particulier, on peut saisir aisément l'ensemble de filtration selon l'invention à l'aide de pinces par la périphérie du socle et ce, sans risque de contamination du filtre. De plus, lorsque l'ensemble de filtration selon l'invention est stocké, par exemple dans une boite, le filtre n'est pas en contact avec le fond de la boite car le support de filtre peut présenter avantageusement une certaine épaisseur, typiquement de quelques millimètres, afin de surélever le filtre et éviter les contaminations accidentelles de l'un de ses faces.

On peut prévoir avantageusement de différencier la face du filtre destinée à recueillir les nanoparticules de l'autre face en regard, à l'aide d'un système de détrompage. Ce système de détrompage peut par exemple consister à conférer une géométrie asymétrique à l'ensemble de filtration afin d'éviter un mauvais positionnement dans la cassette de prélèvement. Un système de détrompage supplémentaire peut également être prévu à la périphérie extérieure de l'ensemble de filtration afin d'éviter qu'un opérateur ne retourne le support de filtre et le filtre maintenu entre les étapes de collecte des particules et d'analyse du filtre par fluorescence X.

Selon une caractéristique avantageuse de l'invention, la portée du socle et le bord intérieur de la bague présentent un rayon de courbure entre 0,3 et 0,8 mm. On précise ici que la hauteur de la bague est égale à deux fois le rayon de courbure du bord intérieur de celle-ci. De préférence, le rayon de courbure du bord intérieur de la bague est compris entre 0,3 et 0,6 mm et celui de la portée du socle est compris entre 0,3 et 0,8 mm.

Selon une autre caractéristique avantageuse de l'invention, le filtre a une épaisseur comprise entre 10 et 50 µm.

De tels rayons de courbure permettent d'obtenir de manière sûre un effet de pincement suffisant pour tendre le filtre mais sans altération de ses propriétés mécaniques et physiques. De façon surprenante, un filtre conforme à l'invention, malgré sa très faible épaisseur, ne se déchire pas lors de son pincement par la bague et ne se déforme pas sous les contraintes exercées par l'opération proprement dite de collecte, une fois qu'il est maintenu tendu dans le support. Ainsi, les inventeurs ont constaté que le filtre reste maintenu tendu sans déformation, c'est-à-dire maintenu le plus à plat possible, même après plusieurs jours de collecte de nanoparticules à des débits de l'ordre du L.min⁻¹. Or, cela est loin d'avoir été évident compte tenu d'une part de la très faible épaisseur du filtre comme précisé ci-avant, d'autre part de la nature microporeuse du filtre qui génère des pertes de charges notables lors de la collecte par aspiration d'un flux d'air. Un homme de l'art aurait pu s'attendre à ce que ces pertes de charge notables aient pour conséquence une déformation du filtre, voire des déchirures de celui-ci. Les inventeurs n'ont observé aucune déformation du filtre malgré des pertes de charges générées allant jusqu'à 90 mbar pour des débits de 1 L.min⁻¹.

Le montage du filtre dans le support selon l'invention est prévu avantageusement pour qu'une fois réalisé, les deux parties du support ne puissent être démontées l'une de l'autre.

Une fois assemblé et intégré au sein d'une cassette d'échantillonnage, un ensemble de filtration selon l'invention permet de faire passer l'intégralité du flux d'air que l'on souhaite aspirer à travers le filtre. Les inventeurs n'ont observé aucune fuite d'air autour de l'ensemble de filtration en configuration intégrée dans une cassette d'échantillonnage.

De préférence, les pores du filtre sont des trous de diamètre calibré compris entre 0,05 et 2 µm, avec de préférence encore une densité de trous comprise entre un nombre de 10⁵ et 5^{∗}10⁸ de trous par cm². Les trous peuvent être effectués selon différents traitements connus tels que le bombardement ionique, les traitements par UV, les attaques chimiques ou une combinaison de ces différents traitements.

Le matériau constitutif du filtre peut être avantageusement un polymère choisi parmi les polyesters saturés tels que le polytéréphtalate d'éthylène, les polycarbonates notamment ceux réalisés à partir de bisphénol A, les polyéthers aromatiques, les polysulfones, les polyoléfines, les polyacrylates, les polyamides, les polyimides, les acétates et les nitrates de cellulose. De préférence, le filtre est en polycarbonate. De tels matériaux microporeux permettent d'atteindre des efficacités de rétention supérieures à 99,5% de nanoparticules de diamètre compris entre 10 et 300 nm, lorsque celles-ci sont en suspension dans l'air et que le débit de collecte est compris entre 0,1 et 10 L.min⁻¹.

La bague et le socle son de préférence en matière plastique choisie parmi le téréphtalate de polyéthylène (PET), le téréphtalate de polybuthylène (PBT), le polyméthacrylate de méthyle (PMMA), le polyamide 6 (PA6), le polyamide 66 (PA66), le polycarbonate (PC), le polypropylène (PP), le polyoxyméthylène Copolymère (POM-C), le polyétheréthercetone (PEEK). La bague et le socle peuvent être réalisées par injection d'une matière thermoplastique ou par usinage d'un bloc en matière thermoplastique.

La(les) matière(s) plastique(s) de la bague et du socle peuvent comporter un ou plusieurs additifs, notamment des additifs aptes à conférer des propriétés antistatiques. La(les) matière(s) plastique(s) peu(ven)t également être chargée(s) par exemple des fibres de verre ou en carbone.

Selon une caractéristique avantageuse, la portée du socle fait saillie d'une distance comprise entre 10 et 1500 µm, de préférence entre 10 et 500 µm par rapport à la bague en position montée. De préférence, la portée du socle fait saillie sur sa périphérie intérieure.

Avantageusement, le socle présente à la périphérie de la portée une face d'appui plan de la bague en position montée. Cette face d'appui plan constitue de préférence le fond d'une gorge d'encastrement de la bague dans le socle en position montée.

Selon une variante de réalisation préférée, le jeu de montage entre bague et portée du socle est compris entre 50 et 250 µm. Un tel jeu permet de tendre un filtre aisément sans risquer de le déchirer par cisaillement.

Avec un rayon de courbure autour de la portée en fond de gorge du socle bien dimensionné, notamment à 0,3 ou 0,4 mm, on s'assure d'une bonne mise sous tension radiale du filtre et d'un encastrement aisé de la bague dans la gorge du socle.

Selon un mode de réalisation préféré, le socle présente à sa périphérie une portion d'identification sur laquelle une étiquette d'identification du filtre peut être agencée. L'étiquette d'identification est de préférence choisie parmi un code alphanumérique, un code bidimensionnel, de type datamatrix, une puce électronique telle qu'une étiquette RFID (acronyme anglais pour « *Radio Frequency Identification* »). Ainsi, l'étiquette d'identification qui contient les informations relatives au filtre et à son support est intégrée au support de filtre. Cela peut être réalisé soit par une technique dite de surinjection, soit par une technique de tampographie, soit par collage, soit par une technique de gravure.

Par le terme « surinjection », on entend une technique qui permette d'intégrer l'étiquette dans le socle dès la fabrication de ce dernier. Ainsi, l'étiquette d'identification est déposée à l'intérieur d'un outillage de moulage entre la partie fixe et la partie mobile du moule. Lors de la fermeture du moule, l'étiquette vient se plaquer contre le socle du support de filtre par aspiration, sans produit de collage ou d'enduction. De cette manière, l'étiquette épouse parfaitement l'emplacement prévu dans le moule et elle ne peut pas être arrachée du support.

Par le terme « collage », on entend tout procédé d'assemblage physique ou chimique qui permet, via une colle ou un adhésif, d'assembler deux matériaux.

Par le terme « tampographie », on entend tout procédé d'impression indirecte qui permet de rapporter l'étiquette d'identification directement sur le socle du support, tel un procédé par transfert d'encre.

Par le terme gravure, on entend tout procédé qui permet de creuser le socle du support, tel un procédé par marquage laser, par micro percussion.

La bague peut également jouer le rôle d'antenne d'étiquette RFID constituée d'un circuit électronique diffusé sur un circuit imprimé (acronyme anglais PCB pour « Printed circuit board »), et pour ce faire, être constituée d'un mélange de fibres de verre noyées dans une résine de type polyimide, polyester, pvc, Kapton®.

Un appareil de montage, ne faisant pas partie de la présente invention et destiné à assembler l'ensemble de filtration décrit ci-avant, comporte :
- une base ;
- une pièce formant étau, apte à être posée sur la base, pour positionner et maintenir en position le socle contre la base ;
- un anneau, apte à s'emboiter dans l'étau, pour guider et centrer la bague autour de la portée du socle maintenu en position contre la base ;
- une pièce d'appui, apte à s'emboiter dans l'anneau, pour appliquer une force d'appui contre la bague guidée et centrée autour de la portée.

L'appareil de montage comporte une vis apte à être maintenue sur la base pour être vissée, afin d'être mise en butée contre la pièce d'appui entre une position d'attente dans laquelle cette dernière est en appui contre la bague elle-même en position dégagée de la portée du socle et, une position extrême de montage dans laquelle la pièce d'appui est en appui contre la bague elle-même en position montée autour de la portée du socle.

Un procédé de montage de l'ensemble de filtration mis en œuvre par l'appareil de montage précédemment décrit, ledit procédé ne faisant pas partie de la présente invention, comporte les étapes suivantes :
- mise en place de l'étau sur la base ;
- emboitement du socle dans l'étau ;
- emboitement de l'anneau dans l'étau ;
- introduction du filtre de sorte à le mettre en appui et à le centrer contre la portée du socle ;
- emboitement de la pièce d'appui dans l'anneau ;
- positionnement et maintien de la vis sur la base ;
- vissage de la vis avec mise en butée contre la pièce d'appui pour amener cette dernière de sa position d'attente à sa position extrême de montage.

L'invention concerne enfin sous un dernier aspect, un procédé de collecte et d'analyse de nanoparticules selon la revendication indépendante 14 et selon lequel on réalise les étapes suivantes :
- aspiration d'un flux d'air susceptible d'être chargé en nanoparticules à travers le filtre tendu de l'ensemble de filtration qui vient d'être décrit ;
- introduction de l'ensemble de filtration dans un spectromètre de fluorescence X ;
- analyse par fluorescence X des nanoparticules retenues par le filtre.

De préférence, le débit d'aspiration du flux d'air à travers le filtre est compris entre 0,1 et 10 L.min⁻¹.

### Description détaillée

D'autres avantages et caractéristiques ressortiront mieux à la lecture de la description détaillée, faite à titre illustratif et non limitatif, en référence aux figures suivantes parmi lesquelles:
- la figure 1A est une vue en éclaté des deux pièces constituant un support de filtre selon une variante de réalisation d'un ensemble de filtration selon l'invention ;
- la figures 1B est une vue en perspective partielle en position assemblée des deux pièces constituant un support de filtre selon une variante de réalisation d'un ensemble de filtration selon l'invention ;
- la figure 1C est une vue de détail en coupe des deux pièces constituant un support de filtre selon une variante de réalisation d'un ensemble de filtration selon l'invention ;
- les figures 2A à 2C sont des vues en perspective selon des variantes de réalisation différentes de la pièce formant le socle du support de filtre selon l'invention,
- la figure 3 est une vue en éclaté du filtre et des deux pièces de son support de l'ensemble de filtration selon l'invention et, d'un appareil de montage destiné à assembler ledit ensemble de filtration;
- la figure 3A est une vue en coupe montrant en détail une étape d'assemblage de l'ensemble de filtration par l'appareil de montage de la figure 3 ;
- la figure 4 représente le signal de mesure par spectrométrie de fluorescence X de différents filtres conformes à l'invention ;
- la figure 5 représente la rétention (taux de pénétration) de nanoparticules d'oxyde de titane TiO₂ dans un filtre selon l'invention en fonction de leur diamètre ;
- la figure 6 représente un spectre de fluorescence X d'un filtre conforme à l'invention, préalablement chargé en nanoparticules d'oxyde de zinc (ZnO).

Les termes « inférieur » et « supérieur » sont à comprendre avec un sens de montage du support de filtre de haut en bas et une position d'utilisation de l'ensemble de filtration dans laquelle le filtre est à l'horizontale et le socle du support de filtre en dessous.

Tel qu'illustré un ensemble de filtration selon l'invention, destiné à la filtration de nanoparticules, comporte un support de filtre constitué de deux pièces 1, 2 dont l'assemblage mutuel permet de tendre et de maintenir sous tension mécanique à plat un filtre 3 à pores aptes à retenir les nanoparticules présentes dans un flux d'air aspiré à travers le filtre.

Bien que non représenté, un ensemble de filtration selon l'invention est destiné à être monté dans une cassette d'échantillonnage adaptée pour laisser passer le flux d'air aspiré à travers le filtre 3 afin de réaliser la collecte proprement dite des nanoparticules.

Un filtre 3 utilisé pour collecter les nanoparticules est une membrane microporeuse, en polyester, de quelques dizaines de microns d'épaisseur et percée d'une multitude de trous de diamètre contrôlé. A titre d'exemple, les trous de diamètre contrôlé ont un diamètre de 0,4 µm, présentent une densité de trous de 10⁵ perforations par cm². Un tel filtre microporeux 3 permet d'atteindre des efficacités de rétention supérieures à 99,5% des nanoparticules en suspension dans l'air, de diamètre compris entre 10 et 300 nm, avec un débit de collecte compris entre 0,1 et 10 L.min⁻¹.

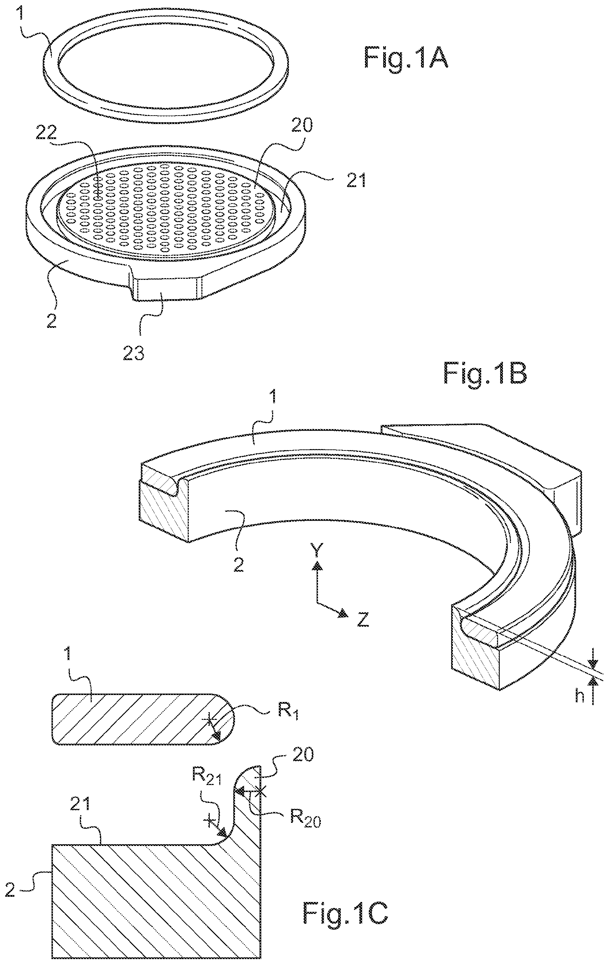

Tel qu'illustré aux figures 1A à 1C, le support du filtre selon l'invention comporte deux pièces 1, 2 réalisées en matière thermoplastique.

La pièce supérieure est une bague 1 de forme générale annulaire. Le bord intérieur de la bague 1 présente un rayon de courbure R1 de 0,5 mm ou de 0,6 mm.

La pièce inférieure forme un socle 2 de forme générale cylindrique percé en son centre pour laisser passer le débit d'air d'aspiration des nanoparticules. Le socle 2 présente à sa périphérie intérieure une portée cylindrique 20 et une face 21 pour réaliser au moins un appui plan avec la bague 1. Le socle 2 présente un rayon de courbure également de 0,5 mm ou de 0,6 mm à tous les angles, tel que le rayon R₂₀ montré en figure 1C. Le rayon de courbure R₂₁ sur la face interne 21 du socle 2 est de 0,3 mm ou de 0,4 mm de façon à bien tendre le filtre 3 radialement à la direction de montage comme détaillé ci-après et permettre un bon encastrement.

Le socle 2 de forme générale cylindrique est asymétrique et présente à sa périphérie extérieure une protubérance 23 qui sert à la fois de moyen de détrompage de positionnement de l'ensemble selon l'invention dans une cassette d'échantillonnage et de portion d'identification sur laquelle une étiquette d'identification du filtre peut être agencée. Cette protubérance 23 peut servir également avantageusement de moyen de préhension de l'ensemble de filtration en vue de son positionnement dans l'appareil d'analyse ultérieure.

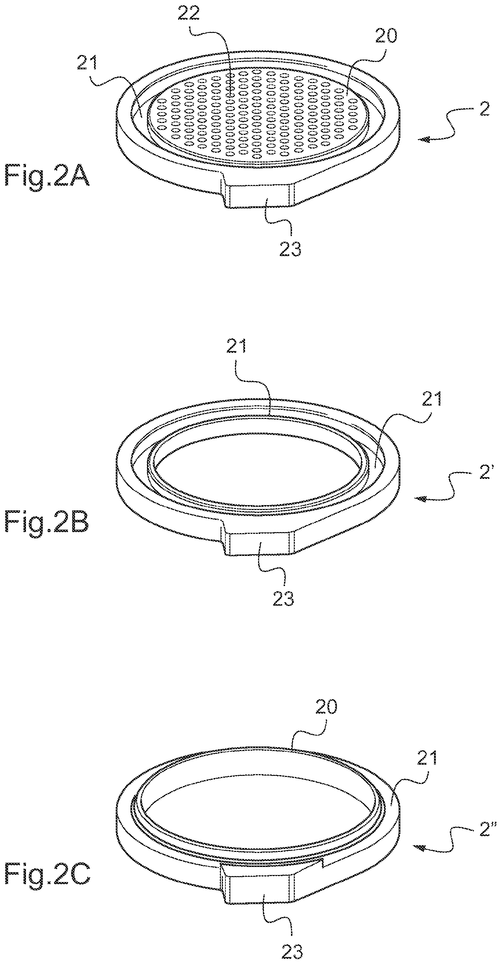

Différentes variantes de réalisation du socle 2 peuvent être prévues. Le socle 2 peut ainsi présenter une portion centrale, à l'intérieur de la portée périphérique 20, sous la forme d'une grille percée de nombreux trous 22 de dimensions millimétriques, typiquement de 1 mm de diamètre, aptes à laisser passer le flux d'air à travers le filtre 3 (figure 2A). Le socle 2 peut présenter une portion centrale évidée avec la face d'appui plan 21 constituant le fond d'une gorge d'encastrement de la bague 1 dans le socle 2 en position montée (figures 2A et 2B), ou avec la face d'appui 21 dépourvue de matière autour (figure 2C).

Conformément à l'invention, la bague 1 est apte à être montée autour de la portée 20 du socle 2 pour permettre de tendre le filtre 3 selon une direction radiale Z à la direction de montage Y, avec un jeu de montage entre eux dimensionné de sorte à maintenir sous tension mécanique par pincement le filtre 3, en appui sur la portée 20, selon cette direction radiale Z à la direction de montage Y. Le jeu de montage entre la bague 1 et le socle 2 est de préférence égal à cinq fois l'épaisseur du filtre, soit de 50 à 250 µm selon le filtre utilisé.

La portée 20 du socle 2 délimite donc la position du plan du filtre 3 par rapport au support. Autrement dit, le filtre 3 est tendu et sa surface tendue définie la surface supérieure de l'ensemble de filtration selon l'invention. Ainsi, l'ensemble de filtration peut être manipulé avec le filtre 3 maintenu à plat, en vue d'être analysé dans un appareil de fluorescence X sous incidence rasante avec un faible angle d'incidence.

Selon la variante de réalisation du socle 2, la bague 1 peut s'insérer complètement dans la gorge du socle (figures 2A et 2B) ou alors se positionner uniquement avec appui plan contre la face d'appui 21 (figure 2C).

Les inventeurs ont testé l'ensemble de filtration une fois assemblé. Dans les conditions expérimentales avec un débit de 1 L.min⁻¹ et une perte de charge générée de l'ordre de 50 mbar, il a été vérifié qu'un filtre 3 selon l'invention est maintenu tendu par l'assemblage mutuel entre la bague 1 et le socle 2. Le support mécanique complémentaire éventuellement ajouté procuré par la grille 22 de la figure 2A n'est pas nécessaire. Aussi, les variantes de réalisation des figures 2B et 2C sont préférées, afin d'éviter les interférences potentielles qui pourraient perturber l'analyse ultérieure d'un filtre 3 par fluorescence X. En revanche, la variante de réalisation de la figure 2A peut-être avantageuse en cas de débit d'aspiration du flux d'air à travers le filtre ou d'une perte de charge générée plus importante.

Tel qu'illustré en figure 1C, la portée 20 du socle 2 est surélevée d'une hauteur h de l'ordre 100 µm par rapport à la bague 1, une fois l'assemblage de l'ensemble de filtration réalisé. Cette surélévation est suffisante pour s'assurer qu'aucune autre partie de l'ensemble de filtration ne s'étende au-dessus du filtre 3, c'est-à-dire en saillie par rapport à ce dernier. Cela permet d'avoir une incidence rasante avec un faible angle d'incidence sur le filtre 3 lors de son analyse par l'appareil de fluorescence X.

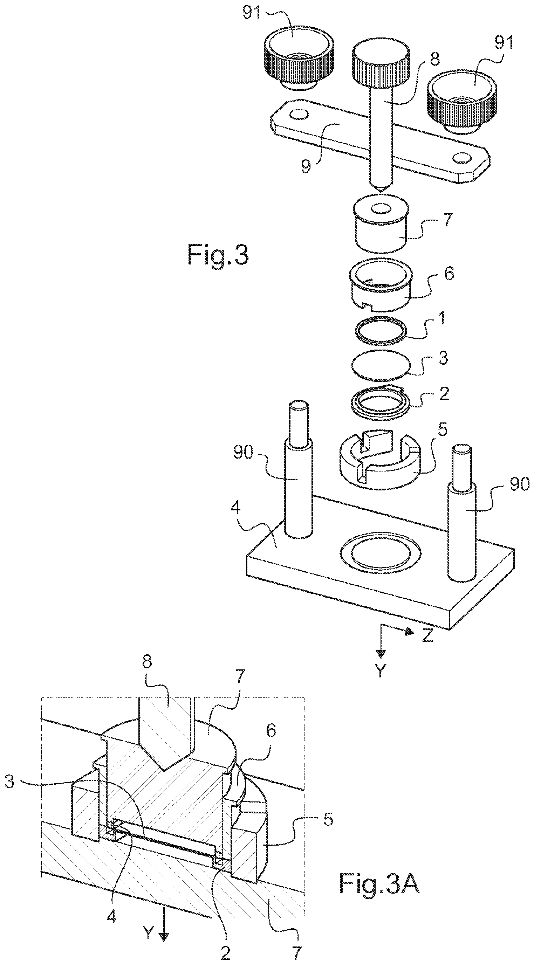

Pour réaliser l'assemblage de l'ensemble filtration selon l'invention, un appareil de montage tel que montré en figure 3 a été réalisé. Cet appareil de montage permet d'assembler la bague 1 et le socle 2 en venant tendre par pincement un filtre 3 intercalé et en conservant ces trois pièces 1, 2, 3 dans des plans parallèles. Cela permet d'éviter de générer des plissures et distorsions sur le filtre 3.

L'appareil de montage permet ainsi de garantir la descente de la bague 1 vers le socle 2 en tendant le filtre 3, en assurant à la fois un guidage d'appui et un centrage de ces pièces les unes par rapport aux autres.

L'appareil de montage représenté comporte tout d'abord une base 4 munie de bras verticaux 90. Ces bras 90 permettent d'assurer la descente de la vis pointeau 8 dans la direction d'assemblage Y, c'est-à-dire selon une direction perpendiculaire à la base 4. Le rôle de la vis 8 est détaillé ci-après.

L'appareil comporte également une pièce formant étau 5 apte à être posée dans une gorge de la base 4. Cet étau a pour fonction de positionner et maintenir en position le socle 2 du support de filtre contre la base 4. Ainsi, le socle est maintenu centré vis-à-vis de la force d'appui exercée par la vis 8 pour réaliser l'assemblage des pièces 1, 2, 3 de l'ensemble comme décrit ci-après.

Un anneau 6 apte à s'emboiter dans l'étau 5 est prévu. Cet anneau a pour fonction de guider et centrer la bague 1 autour de la portée 20 du socle 2 maintenu en position contre la base 4.

L'appareil comporte en outre une pièce d'appui 7 apte à s'emboiter dans l'anneau 6. Cette pièce d'appui 7 a pour fonction d'appliquer une force d'appui contre la bague 1 guidée et centrée autour de la portée 20 du socle 2.

Enfin, dans l'appareil de montage, l'assemblage des pièces 1, 2, 3 de l'ensemble est assuré par la vis 8. Cette vis 8 est apte à être maintenue sur la base 4 par une pièce de serrage 9 vissée par les deux écrous 91. Chacun de ces écrous 91 est apte à être vissé sur l'un des bras verticaux 90 et permettre une descente des éléments selon des plans rigoureusement parallèles.

Au préalable du vissage, on réalise l'empilement avec emboitement des différentes pièces de l'appareil et de l'ensemble de filtration selon l'invention, le filtre 3 étant introduit délicatement.

Ainsi, par vissage de la vis pointeau 8, celle-ci vient en butée contre la pièce d'appui 7 entre une position d'attente dans laquelle cette dernière est en appui contre la bague 1 elle-même en position dégagée de la portée 20 du socle 2 et une position extrême de montage dans laquelle la pièce d'appui 7 est en appui contre la bague 1 elle-même en position montée autour de la portée 20 du socle.

La figure 3A illustre une position intermédiaire de montage dans laquelle la bague 1 commence à être encastrée dans la gorge 21 du socle 2 en venant tendre mécaniquement le filtre 3 en appui sur la portée 20. Ainsi, on peut voir sur cette figure, que la pièce d'appui 7 qui coulisse dans l'anneau 6 lors du vissage de la vis 8, permet d'exercer une force parfaitement contrôlée en tout point de la bague 1. Ainsi, à chaque tour de vis 8 on rapproche les plans parallèles de chacune des pièces 1, 2, 3 de l'ensemble de filtration selon l'invention, et ce jusqu'à ce que le filtre 3 soit tendu et maintenu entre la bague 1 et le socle 2.

Plusieurs filtres en matériaux différents sous forme de membranes microporeuses susceptibles d'être utilisés en tant que filtres 3 de l'invention ont été testés pour valider leur analyse possible par fluorescence X.

Un premier test a consisté à charger ces différents filtres en nanoparticules d'oxyde de titane TiO₂ avec une densité de 14 µg/cm² en atome de titane Ti.

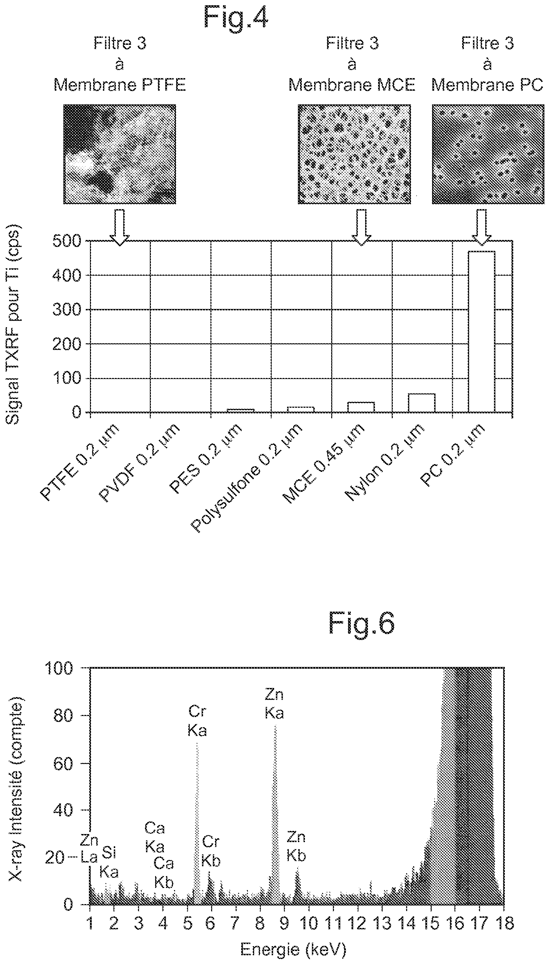

La figure 4 illustre le signal relatif au titane Ti mesuré par spectrométrie de fluorescence X pour des filtres respectivement en polytétrafluoroéthylène (PTFE), polyfluorure de vinylidène (PVDF), polyethersulfone (PES), polysulfone, esters mixtes de cellulose (MCE), nylon, polycarbonate (PC).

On constate à la lecture de cette figure 4 que le signal le plus intense est obtenu pour un filtre en polycarbonate (PC). On constate également que le signal est moindre voire nul pour les filtres en PTFE, PVDF, PES, Polysulfone, MCE et Nylon.

Un deuxième test a consisté à étudier l'efficacité de filtration en fonction de la nature fibreuse ou selon des trous débouchant d'une membrane constituant un filtre. Ainsi, on a réalisé des essais de perméation avec plusieurs filtres en matériaux différents et avec une nature et une dimension de pores différentes.

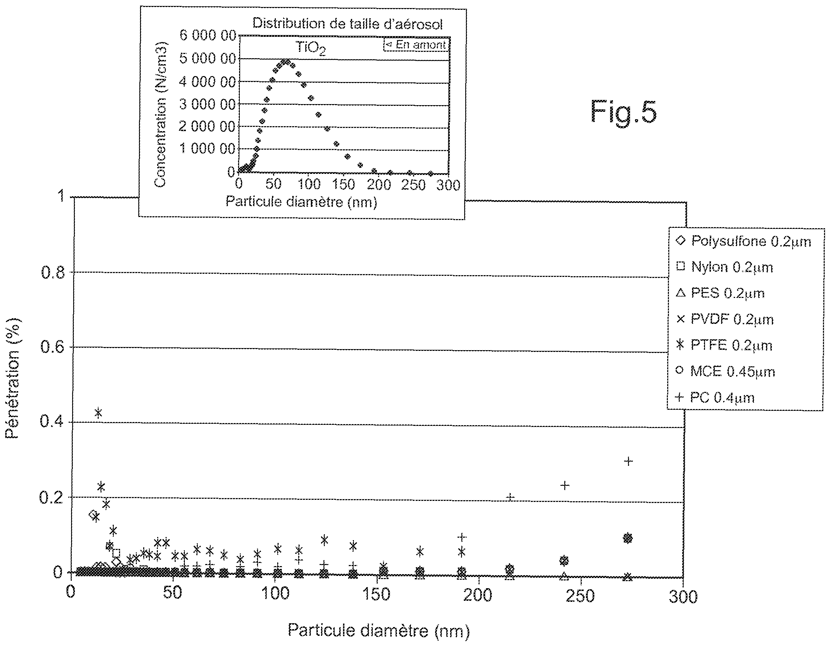

Ainsi, la figure 5 illustre le résultat de ces essais : elle montre le taux de pénétration en fonction du diamètre des nanoparticules de TiO2 sur différents filtres.

On constate à la lecture de cette figure 5 que pour tous les filtres testés, leur efficacité de rétention est supérieure à 99,5%, et ce quelle que soit le diamètre des nanoparticules jusqu'à 300 nm.

On constate également que des filtres en PC, à trous de diamètre calibré et densité contrôlée, ont une efficacité de rétention comparable à celle des autres filtres testés en matériau fibreux.

A titre d'exemple, on a représenté en figure 6 un spectre de fluorescence X obtenu après analyse d'un filtre en polycarbonate (PC), chargé en nanoparticules d'oxyde de zinc (ZnO), la densité de chargement préalable du filtre en nanoparticules étant égale à environ 0,15µg/cm².

L'invention n'est pas limitée aux exemples qui viennent d'être décrits; on peut notamment combiner entre elles des caractéristiques des exemples illustrés au sein de variantes non illustrées.

## Revendications

1. Ensemble de filtration pour filtrer des nanoparticules, comportant :
- un filtre (3) à pores aptes à retenir en leur sein des nanoparticules susceptibles d'être présentes dans un flux d'air destiné à passer à travers le filtre,
- un support de filtre comportant deux parties dont :
• une partie inférieure formant un socle (2) comportant une portée périphérique (20) sur laquelle le filtre est apte à être en appui ;
• une partie supérieure en forme de bague (1) apte à être montée autour de la portée du socle, le montage de la bague (1) autour de la portée du socle permettant de tendre le filtre selon une direction radiale à la direction de montage, le jeu de montage entre la bague et la portée du socle étant dimensionné de sorte à maintenir sous tension mécanique par pincement le filtre, en appui sur la portée, selon une direction radiale à la direction de montage, la portée (20) du socle (2) faisant saillie par rapport à la bague (1), de sorte qu'après assemblage de la bague (1) avec le socle (2), la portée (20) est surélevée par rapport à la bague (1).

2. Ensemble de filtration selon la revendication 1, la portée du socle et le bord intérieur de la bague présentant un rayon de courbure entre 0,3 et 0,8 mm.

3. Ensemble de filtration selon la revendication 1, le filtre ayant une épaisseur comprise entre 10 et 50 µm.

4. Ensemble de filtration selon les revendications 1 à 3, les pores du filtre étant des trous (22) de diamètre calibré compris entre 0,05 et 2 µm.

5. Ensemble de filtration selon la revendication 4, la densité des trous du filtre étant comprise entre un nombre de 10⁵ et 5^{∗}10⁸ de trous par cm².

6. Ensemble de filtration selon l'une des revendications précédentes, le matériau constitutif du filtre étant un polymère choisi parmi les polyesters saturés tels que le polytéréphtalate d'éthylène, les polycarbonates notamment ceux réalisés à partir de bisphénol A, les polyéthers aromatiques, les polysulfones, les polyoléfines, les polyacrylates, les polyamides, les polyimides, les acétates et les nitrates de cellulose.

7. Ensemble de filtration selon la revendication 6, le filtre étant en polycarbonate (PC).

8. Ensemble de filtration selon l'une des revendications précédentes, la bague et le socle étant en matière plastique choisie parmi le téréphtalate de polyéthylène (PET), le téréphtalate de polybuthylène (PBT), le polyméthacrylate de méthyle (PMMA), le polyamide 6 (PA6), le polyamide 66 (PA66), le polycarbonate (PC), le polypropylène (PP), le polyoxyméthylène Copolymère (POM-C), le polyétheréthercetone (PEEK).

9. Ensemble de filtration selon la revendication 8, la(les) matière(s) plastique(s) de la bague et du socle comportant un ou plusieurs additifs, notamment des additifs aptes à conférer des propriétés antistatiques.

10. Ensemble de filtration selon l'une des revendications précédentes, la portée (20) du socle (2) faisant saillie d'une distance h comprise entre 10 et 1500 µm par rapport à la bague (1) en position montée.

11. Ensemble de filtration selon l'une des revendications précédentes, le socle présentant à la périphérie de la portée (20) une face d'appui plan (21) de la bague en position montée.

12. Ensemble de filtration selon la revendication 11, la face d'appui plan (21) constituant le fond d'une gorge d'encastrement de la bague dans le socle en position montée.

13. Ensemble de filtration selon l'une des revendications précédentes , le jeu de montage entre bague et portée du socle étant compris entre 50 et 250 µm.

14. Procédé de collecte et d'analyse de nanoparticules selon lequel on réalise les étapes suivantes :
- aspiration d'un flux d'air susceptible d'être chargé en nanoparticules à travers le filtre (3) tendu de l'ensemble de filtration selon l'une des revendications 1 à 13;
- introduction de l'ensemble de filtration dans un spectromètre de fluorescence X;
- analyse par fluorescence X des nanoparticules retenues par le filtre.

15. Procédé de collecte et d'analyse selon la revendication 14, le débit d'aspiration du flux d'air à travers le filtre (3) étant compris entre 0,1 et 10 L.min⁻¹.

## Patentansprüche

1. Filtrierungsanordnung zum Filtern von Nanopartikeln, die aufweist:
- einen Filter (3) mit Poren, die geeignet sind, in sich Nanopartikel zurückzuhalten, die möglicherweise in einem Luftstrom vorhanden sind, der dazu bestimmt ist, durch den Filter zu treten,
- einen Filterstützkörper, der zwei Teile aufweist, darunter:
• einen unteren Teil, der einen Sockel (2) bildet, der einen umfänglichen Auflagebereich (20) aufweist, an dem der Filter anliegen kann;
• einen oberen Teil in Form eines Rings (1), der geeignet ist, um den Auflagebereich des Sockels herum montiert zu werden, wobei die Montage des Rings (1) um den Auflagebereich des Sockels herum es ermöglicht, den Filter entlang einer zur Montagerichtung radialen Richtung zu spannen, wobei das Montagespiel zwischen dem Ring und dem Auflagebereich des Sockels so bemessen ist, dass der Filter durch Klemmung, an dem Auflagebereich anliegend, entlang einer zur Montagerichtung radialen Richtung unter mechanischer Spannung gehalten wird,
wobei der Auflagebereich (20) des Sockels (2) in Bezug auf den Ring (1) vorspringt, so dass nach dem Zusammenbau des Rings (1) mit dem Sockel (2) der Auflagebereich (20) gegenüber dem Ring (1) erhöht ist.

2. Filtrierungsanordnung nach Anspruch 1, wobei der Auflagebereich des Sockels und der innere Rand des Rings einen Krümmungsradius zwischen 0,3 und 0,8 mm aufweisen.

3. Filtrierungsanordnung nach Anspruch 1, wobei der Filter eine Dicke zwischen 10 und 50 µm hat.

4. Filtrierungsanordnung nach den Ansprüchen 1 bis 3, wobei die Poren des Filters Löcher (22) mit einem kalibrierten Durchmesser zwischen 0,05 und 2 µm sind.

5. Filtrierungsanordnung nach Anspruch 4, wobei die Dichte der Löcher des Filters zwischen einer Zahl von 10⁵ und 5*10⁸ Löchern pro cm² liegt.

6. Filtrierungsanordnung nach einem der vorhergehenden Ansprüche, wobei das Material, aus dem der Filter besteht, ein Polymer ist, das unter den gesättigten Polyestern wie dem Polyethylenterephthalat, den Polycarbonaten, insbesondere den ausgehend von Bisphenol A hergestellten, den aromatischen Polyethern, den Polysulfonen, den Polyolefinen, den Polyacrylaten, den Polyamiden, den Polyimiden, den Acetaten und den Cellulosenitraten ausgewählt ist.

7. Filtrierungsanordnung nach Anspruch 6, wobei der Filter aus Polycarbonat (PC) ist.

8. Filtrierungsanordnung nach einem der vorhergehenden Ansprüche, wobei der Ring und der Sockel aus einem Kunststoff sind, der unter Polyethylenterephthalat (PET), Polybutylenterephthalat (PBT), Polymethylmethacrylat (PMMA), Polyamid 6 (PA6), Polyamid 66 (PA66), Polycarbonat (PC), Polypropylen (PP), Polyoxymethylen-Copolymer (POM-C), Polyetheretherketon (PEEK) ausgewählt ist.

9. Filtrierungsanordnung nach Anspruch 8, wobei der(die) Kunststoff(e) des Rings und des Sockels einen oder mehrere Zusatzstoffe aufweist(aufweisen), insbesondere Zusatzstoffe, die antistatische Eigenschaften verleihen können.

10. Filtrierungsanordnung nach einem der vorhergehenden Ansprüche, wobei der Auflagebereich (20) des Sockels (2) in der montierten Position um einen Abstand h zwischen 10 und 1500 µm in Bezug auf den Ring (1) vorspringt.

11. Filtrierungsanordnung nach einem der vorhergehenden Ansprüche, wobei der Sockel am Umfang des Auflagebereichs (20) eine Anlagefläche (21) zur planen Anlage des Rings in der montierten Position aufweist.

12. Filtrierungsanordnung nach Anspruch 11, wobei die Anlagefläche (21) zur planen Anlage den Boden einer Nut zum Einpassen des Rings in den Sockel in der montierten Position bildet.

13. Filtrierungsanordnung nach einem der vorhergehenden Ansprüche, wobei das Montagespiel zwischen Ring und Auflagebereich des Sockels zwischen 50 und 250 µm beträgt.

14. Verfahren zum Sammeln und Analysieren von Nanopartikeln, gemäß dem die folgenden Schritte ausgeführt werden:
- Ansaugen eines Luftstroms, der mit Nanopartikeln beladen sein kann, durch den gespannten Filter (3) der Filtrierungsanordnung nach einem der Ansprüche 1 bis 13 hindurch;
- Einführen der Filtrierungsanordnung in ein Röntgenfluoreszenzspektrometer;
- Röntgenfluoreszenzanalyse der vom Filter zurückgehaltenen Nanopartikel.

15. Verfahren zum Sammeln und Analysieren nach Anspruch 14, wobei der Ansaugvolumenstrom des Luftstroms durch den Filter (3) zwischen 0,1 und 10 L.min⁻¹ beträgt.

## Claims

1. A filtration assembly for filtering nanoparticles, including:
- a filter (3) having pores that are capable of retaining within them nanoparticles that are likely to be present in an air flow intended to pass through the filter,
- a filter support including two parts, these being:
• a lower base-forming part (2) including a peripheral bearing surface (20) on which the filter can rest;
• an upper ring-shaped part (1) capable of being mounted around the bearing surface of the base, the mounting of the ring (1) around the bearing surface of the base making it possible to tension the filter in a direction radial to the mounting direction, the mounting clearance between the ring and the bearing surface of the base being dimensioned such as to maintain the filter resting on the bearing surface under mechanical stress by pinching, in a direction radial to the mounting direction,
the bearing surface (20) of the base (2) protruding from the ring (1), such that after assembly of the ring (1) with the base (2), the bearing surface (20) is raised relative to the ring (1).

2. The filtration assembly as claimed in claim 1, the bearing surface of the base and the internal edge of the ring having a radius of curvature of between 0.3 and 0.8 mm.

3. The filtration assembly as claimed in claim 1, the filter having a thickness of between 10 and 50 µm.

4. The filtration assembly as claimed in claims 1 to 3, the pores of the filter being holes (22) with a calibrated diameter of between 0.05 and 2 µm.

5. The filtration assembly as claimed in claim 4, the density of the holes of the filter being between a number of 10⁵ and 5x10⁸ holes per cm².

6. The filtration assembly as claimed in one of the preceding claims, the constituent material of the filter being a polymer selected from among the saturated polyesters such as polyethylene terephthalate, polycarbonates, in particular those made from bisphenol A, aromatic polyethers, polysulfones, polyolefins, polyacrylates, polyamides, polyimides, acetates and cellulose nitrates.

7. The filtration assembly as claimed in claim 6, the filter being made of polycarbonate (PC).

8. The filtration assembly as claimed in one of the preceding claims, the ring and the base being made from a plastic material selected from among polyethylene terephthalate (PET), polybutylene terephthalate (PBT), polymethyl methacrylate (PMMA), polyamide 6 (PA6), polyamide 66 (PA66), polycarbonate (PC), polypropylene (PP), polyoxymethylene copolymer (POM-C), polyether ether ketone (PEEK).

9. The filtration assembly as claimed in claim 8, the one or more plastic material(s) of the ring and of the base including one or a plurality of additives, in particular additives capable of imparting antistatic properties.

10. The filtration assembly as claimed in one of the preceding claims, the bearing surface (20) of the base (2) projecting for a distance h of between 10 and 1500 µm in relation to the ring (1) in the mounted position.

11. The filtration assembly as claimed in one of the preceding claims, the base having at the periphery of the bearing surface (20) a plane supporting surface (21) for the ring in the mounted position.

12. The filtration assembly as claimed in claim 11, the plane supporting surface (21) constituting the bottom of an accommodating throat for the ring in the base in the mounted position.

13. The filtration assembly as claimed in one of the preceding claims, the mounting clearance between the ring and the bearing surface of the base being between 50 and 250 µm.

14. A method of collection and analysis of nanoparticles according to which the following stages are carried out:
- aspiration of an air flow that is likely to be charged with nanoparticles across the tensioned filter (3) of the filtration assembly as claimed in one of claims 1 to 13;
- introduction of the filtration assembly into a fluorescence spectrometer X;
- analysis by X-ray fluorescence of the nanoparticles retained by the filter.

15. A method of collection and analysis as claimed in claim 14, the rate of aspiration of the air flow through the filter (3) being between 0.1 and 10 L.min⁻¹.
